# EUROPÄISCHE PATENTSCHRIFT

(11) **EP 4 013 264 B1**
(45) Veröffentlichungstag und Bekanntmachung des Hinweises auf die Patenterteilung: **15.11.2023**
(21) Anmeldenummer: 20737209.5
(22) Anmeldetag: 13.07.2020
(51) Int. Cl.: A45F 3/15, B62B 1/00, A45F 3/04, B62B 5/06, B62B 5/00

(54) **TRANSPORTVORRICHTUNG MIT ROLLKÖRPER**
TRANSPORT DEVICE HAVING A ROLLING BODY
DISPOSITIF DE TRANSPORT COMPORTANT UN CORPS ROULANT

(30) Priorität: 15.08.2019 CH 10272019
(43) Veröffentlichungstag der Anmeldung: 22.06.2022
(73) Patentinhaber: Swiss Full Panorama GmbH, 8704 Herrliberg (CH)
(72) Erfinder: STEINER, Thomas, 8302 Kloten (CH)
(74) Vertreter: Rentsch Partner AG
(86) Internationale Anmeldenummer: PCT/EP2020/069758
(87) Internationale Veröffentlichungsnummer: WO 2021/028137

(56) Entgegenhaltungen:
- WO-A1-2010/147630
- GB-A- 2 322 601
- GB-A- 2 523 995
- US-A- 2 967 058
- US-A- 5 820 141
- US-A1- 2004 130 112
- US-A1- 2007 290 460
- US-A1- 2017 144 683

## Beschreibung

### GEBIET DER ERFINDUNG

Die vorliegende Erfindung bezieht sich auf das Gebiet der Transportvorrichtungen, insbesondere zum Gepäcktransport, gemäss dem Oberbegriff der Patentansprüche.

### HINTERGRUND DER OFFENBARUNG

Aus dem Stand der Technik sind Transportvorrichtungen, insbesondere Rollkoffer und Rucksäcke mit Rollen bzw. Trolleys, bekannt, die aus einem Koffer- bzw. Gepäckbereich zum Aufnehmen und Transportieren von Objekten, Transportmitteln, die im Bereich einer Unterseite und/oder Rückseite des Kofferbereichs angeordnet sind, sowie einer Griffanordnung bestehen. Diese Transportvorrichtungen erlauben ein gleitendes oder rollendes Manövrieren lediglich entlang einer im Wesentlichen ebenen Oberfläche, oder aber weisen verhältnismässig grosse, unhandliche und schwere Räder auf. Das Dokument US 2,967,058 A offenbart eine Transportvorrichtung gemäß dem Oberbegriff des Anspruchs 1.

### DARSTELLUNG DER OFFENBARUNG

Nachteilig an dem vom Stand der Technik bekannten Transportvorrichtungen mit verhältnismässig kleinen Rädern bzw. Rollen ist die eingeschränkte Geländetauglichkeit, insbesondere die Toleranz gegenüber sich auf dem Boden befindender Hindernisse.

Nachteilig an dem vom Stand der Technik bekannten Transportvorrichtungen mit verhältnismässig grossen Rädern bzw. Rollen ist deren Gewicht und Unhandlichkeit und oft auch deren Breite, insbesondere wenn die Räder seitlich am der Transportvorrichtung montiert sind bzw. über diese hinausragen.

Des Weiteren sinken Transportvorrichtungen mit Rädern wegen der relativ geringen Auflagefläche bei weichem Untergrund (Kies, Sand, feuchtem Boden etc.) leicht ein.

Die allgemeine Aufgabe der Erfindung besteht darin, den Stand der Technik auf dem Gebiet der Transportvorrichtungen weiterzuentwickeln, insbesondere eine im operativen Betrieb selbststabilisierende und geländetaugliche Transportvorrichtung, die mehrere Rollkörper aufweisen kann, die jedoch selbst mit lediglich einem Rollkörper funktioniert. In einigen Ausführungsformen ist der Rollkörper zu den Enden hin entlang der Symmetrieachse im Durchmesser verjüngend, insbesondere ellipsoid ausgebildet.

Diese Aufgabe wird durch die im unabhängigen Patentanspruch definierte Transportvorrichtung gelöst.

Weitere vorteilhafte Ausführungsformen ergeben sich aus den abhängigen Ansprüchen, der Beschreibung, sowie den Zeichnungen.

Ein erster Aspekt der Offenbarung betrifft eine Transportvorrichtung nach Anspruch 1, insbesondere zum Gepäcktransport, die eine Tragstruktur, ein Kopplungselement, sowie einen Rollkörper und einen Transportbehälter zum Aufnehmen von Objekten, insbesondere Gepäck, umfasst. Der Transportbehälter kann lösbar oder fest mit der Tragstruktur verbunden sein. Der Rollkörper weist eine Symmetrieachse und eine Rotationssymmetrie auf und ein Durchmesser des Rollkörpers kann kleiner oder gleich seiner Ausdehnung entlang der Symmetrieachse bzw. Drehachse sein. Die Tragstruktur verbindet das Kopplungselement und den Rollkörper und es befindet sich mehr als die Hälfte des Volumens des Transportbehälters (und damit insbesondere bei typischer bzw. gleichmässiger Beladung auch der Schwerpunkt der Transportvorrichtung) auf einer ersten Seite einer Ebene, die im operativen Betrieb dem Untergrund zugewandt ist. Die Ebene ist durch zwei Punkte auf der Symmetrieachse des Rollkörpers, sowie dem Mittelpunkt des Kopplungselements definiert. Der Transportbehälter ist zwischen Kopplungselement und Rollkörper angeordnet. Im operativen Betrieb rollt der Rollkörper über den Untergrund. Das Kopplungselement dient zum Übertragen einer externen Kraft auf die Transportvorrichtung zu deren Bewegung. Beispielsweise würde ein Benutzer zum Ziehen der Transportvorrichtung dies über das Kopplungselement durchführen.

In einigen Ausführungsformen befindet sich mehr als 70%, insbesondere mehr als 90%, des Volumens des Transportbehälters auf der dem Untergrund, respektive Boden, zugewandten ersten Seite der beschriebenen Ebene. In Variationen der Transportvorrichtung befindet sich das gesamte Volumen des Transportbehälters auf der dem Untergrund, respektive Boden, zugewandten ersten Seite der beschriebenen Ebene.

Die hier beschriebene Positionierung und Anordnung des Transportbehälters hat den Vorteil, dass sich der Schwerpunkt des Transportbehälters im operativen Betrieb unterhalb der beschriebenen Ebene befindet, dadurch wird, ähnlich einem Pendel, eine Rückstellkraft, respektive ein Drehmoment, auf die Vorrichtung ausgeübt, sobald die Vorrichtung um ihre Längsachse aus ihrer Gleichgewichtslage rotiert wird, sodass diese in ihre Gleichgewichtslage zurückbewegt wird. Dies stabilisiert die Lage der Transportvorrichtung und minimiert die Wahrscheinlichkeit des Umkippens, selbst wenn die Transportvorrichtung mit lediglich einem Rollkörper ausgestattet ist. Die Ausstattung mit lediglich einem Rollkörper erlaubt eine leichtere und schmalere Bauweise der Transportvorrichtung als mit zwei beispielsweise seitlich angebrachten verhältnismässig grossen Rädern gemäss dem Stand der Technik.

In einigen Ausführungsformen kann der Durchmesser des Rollkörpers, an jeder Position senkrecht zu seiner Symmetrieachse, kleiner oder gleich der Länge, respektive Breite, des Rollkörpers sein. Der Durchmesser des Rollkörpers kann 90% der Breite des Rollkörpers sein, insbesondere 60%, oder beispielsweise auch 40%.

In einigen Ausführungsformen kann der Rollkörper zu den Enden hin entlang der Symmetrieachse im Durchmesser verjüngend ausgebildet sein, insbesondere kann der Rollkörper im Wesentlichen in Form eines Rotationsellipsoids oder eines Doppelkonus ausgebildet sein. Ein Vorteil des Einsatzes eines derartigen Rollkörpers liegt in der allgemeinen Toleranz gegenüber Unebenheiten des Untergrunds. Der Rollkörper rollt auch über solche Hindernisse, die bei einer Transportvorrichtung, aus dem Stand der Technik, mit zwei Rädern an deren Achse hängen bleiben können, selbst wenn die Räder einen gleich grossen Durchmesser aufweisen wie der des Rollkörpers der Offenbarung. Bei weichem Untergrund (Kies, Sand, feuchtem Boden etc.) erhöht sich (im Gegensatz zu verhältnismässig schmalen Rädern) durch ein leichtes Einsinken zudem automatisch die Auflagefläche des relativ breit ausgestalteten Rollkörpers. Ein weiteres Einsinken wird hierdurch verhindert. Ein Rollkörper in Form ähnlich eines Rotationsellipsoids ist zusätzlich vorteilhaft, da bei einer Rotation der Transportvorrichtung um deren Längsachse nur ein geringes zusätzliches Drehmoment auf den Schwerpunkt des Transportbehälters verursacht wird. Dies ist der Fall, da der Rollkörper, durch dessen Mittelpunkt die Längsachse verlaufen kann, in gleichem Masse mitrotiert werden kann und es weiterhin einen Kontaktpunkt auf dem Rollkörper gibt. Dies bedeutet ein geringeres zusätzliches Drehmoment, als wenn der Rollkörper als Zylinder geformt wäre oder durch zwei Räder ersetzt würde; dabei würde nämlich die volle Höhe eines im äusseren Bereich des Zylinders oder unter einem Rad liegenden Hindernisses ein entsprechend höheres Drehmoment verursachen. Das Drehmoment wäre darüber hinaus ebenfalls in einer Ausführungsform des Rollkörpers als Kugel oder Ball höher, da in solchen Fällen der Radius der Kugel bzw. des Balles sowohl in der Längs- wie auch in der Querachse per Definition denselben Durchmesser aufweist, während das Ellipsoid in der Querachse der Transportvorrichtung einen wesentlich höheren Durchmesser aufweist, der auf diese Weise im Vergleich zur Kugel bzw. Ball stabilisierend wirkt.

Das Ellipsoid trägt dadurch zur Stabilität der Transportvorrichtung bei, da es das Zurückpendeln der Transportvorrichtung ihre Ausgangsposition unterstützt.

In einigen Ausführungsformen kann der Rollkörper zweigeteilt sein, mit zwei symmetrischen Hälften, wobei eine Symmetrieebene senkrecht auf der Rotationsachse des Rollkörpers stehen kann und durch den Volumenmittelpunkt des Rollkörpers verläuft.

In weiteren Ausführungsformen ist eine Segmentierung des Rollkörpers in zwei oder mehr Segmente möglich. Dies hat den Vorteil, dass die Achse des Rollkörpers so angeordnet werden kann, dass sie nicht durch die Luftkammern der aufblasbaren Variante des Rollkörpers führt, womit die Wahrscheinlichkeit eines Luftlecks bzw. Druckabfalls vermindert wird. Ein weiterer Vorteil liegt in einer erhöhten Redundanz, für den Fall, dass eines der Segmente den erhöhten Druck im Inneren verlieren würde, womit die Funktionalität des Rollkörpers durch die restlichen Segmente aufrechterhalten werden könnte.

In einigen Ausführungsformen kann die Tragstruktur der Transportvorrichtung an der dem Kopplungselement gegenüberliegenden Seite zur Aufnahme des Rollkörpers derart ausgebildet sein, dass dieser um seine Rotationsachse drehbar mit der Tragstruktur verbunden werden kann. Dabei können, ähnlich zu Radaufhängungen, Rahmenendstücke in den Rollkörper eingesteckt werden, welche die Verbindung herstellen.

In weiteren Ausführungsformen umfasst die Tragstruktur Aufnahmestellen für eine durch den Rollkörper verlaufende, lösbar angeordnete, Achse zur drehbaren Lagerung des Rollkörpers.

In weiteren Ausführungsformen umfasst die Tragstruktur Aufnahmestellen für eine durch den Rollkörper verlaufende, fest angeordnete, Achse zur drehbaren Lagerung des Rollkörpers.

Dabei gilt bei allen Varianten grundsätzlich: Das von der Transportvorrichtung auf den Benutzer ausgeübte Drehmoment ist umso geringer, (i) je kürzer der Abstand zwischen dem Schwerpunkt der Transportvorrichtung zur Achse des Rollkörpers im Verhältnis zum Abstand zwischen dem Schwerpunkt der Transportvorrichtung zum Benutzer ist, und (ii) je grösser der Neigungswinkel der Transportvorrichtung zum Untergrund beim Ziehen ist, d.h. je aufrechter die Transportvorrichtung gezogen wird.

In einigen Ausführungsformen kann die Tragstruktur der Transportvorrichtung verbundene Streben umfassen und als Rahmen, Chassis oder Skelettstruktur ausgebildet sein.

In einigen Ausführungsformen kann die Tragstruktur der Transportvorrichtung einstückig bzw. integral mit dem Transportbehälter ausgebildet bzw. verbunden sein. Dabei besteht die Möglichkeit, dass der Transportbehälter strukturelle bzw. tragende Funktionen für die Transportvorrichtung übernimmt.

In einigen Ausführungsformen umfasst die Tragstruktur Gestänge und/oder grenzt an den Transportbehälter, insbesondere versteifte Abschnitte des Transportbehälters, an. Dabei kann das Gestänge verschiedene Werkstoffe umfassen, möglich sind Metalle, sowie Kunst- und Verbundwerkstoffe etc. Vorteilhaft ist die Tragstruktur derart ausgebildet, dass keine oder nur eine geringe Deformation, insbesondere ein Durchhängen in Richtung des Untergrunds, in verschiedenen Beladungszuständen, insbesondere im voll beladenen und leeren Zustand, auftritt.

In einigen Ausführungsformen kann die Tragstruktur, insbesondere im Fall, dass der Transportbehälter einstückig mit der Tragstruktur ausgebildet ist, in mindestens einem Teilbereich flexibel ausgestaltet sein, sodass sich die Transportvorrichtung je nach Beladung des Transportbehälters mehr oder weniger deformiert. Zusätzlich, oder als Alternative kann die Tragstruktur mindestens in Teilbereichen federnd ausgebildet sein. Dabei kann die Tragstruktur in einigen Ausführungsformen zumindest in Teilbereichen bogenförmig ausgebildet sein, wobei die Bogenform in Richtung der Schwerkraft oder entgegen der Richtung der Schwerkraft ausgerichtet ist. Ähnlich einer Blattfeder, erlaubt eine bogenförmige Tragstruktur einen gefederten Transport von Objekten. Dadurch ergibt sich potentiell ein Durchhängen bzw. eine Verformung in Richtung des Untergrunds und je nach konkreter Anordnung des Rollkörpers eine verringerte Bodenfreiheit, jedoch ändert dies nicht das Prinzip und die Funktionsweise der Transportvorrichtung. Dabei ist die Tragstruktur als solche und/oder der Transportbehälter in mindestens einem Teilbereich flexibel ausgestaltet.

In einigen Ausführungsformen kann der Transportbehälter durch Gurte, ein Netz, eine Plache, einen Sack oder ähnlichem mit der Tragstruktur verbunden sein. Dabei kann die Tragstruktur als solche in mindestens einem Teilbereich flexibel ausgestaltet sein und/oder das Netz, die Plache, der Sack oder ähnliches einstückig mit der Tragstruktur ausgebildet sein, sodass sich die Transportvorrichtung je nach Beladung des Transportbehälters deformiert. Dadurch ergibt sich potentiell ein Durchhängen in Richtung des Untergrunds und je nach konkreter Anordnung des Rollkörpers eine verringerte Bodenfreiheit, jedoch ändert dies nicht das Prinzip und die Funktionsweise der Transportvorrichtung. Dabei kann die Tragstruktur klappbar oder faltbar ausgebildet sein.

In einigen Ausführungsformen kann die Tragstruktur insbesondere zwischen Kopplungselement und Transportbehälter und/oder zwischen Rollkörper und Transportbehälter angewinkelt ausgestaltet sein, wobei sich auch bei dieser Ausführungsform mehr als die Hälfte des Volumens des Transportbehälters (und damit insbesondere bei typischer bzw. gleichmässiger Beladung auch der Schwerpunkt der Transportvorrichtung) auf einer ersten Seite einer Ebene befindet, die im operativen Betrieb dem Untergrund zugewandt ist.

In einigen Ausführungsformen ist der Rollkörper fest oder lösbar mit der Tragstruktur verbunden. Dies erlaubt das vorteilhafte Anbringen und Entfernen des lösbar verbundenen Rollkörpers, in Abhängigkeit von der gewünschten Verwendung der Transportvorrichtung. Ferner wird bei einer permanenten und festen Verbindung mit der Tragstruktur die Widerstandsfähigkeit der Verbindung mit der Tragstruktur erhöht.

In einigen Ausführungsformen umfasst der Rollkörper mindestens ein aufblasbares Segment und mindestens ein Ventil. Dies erlaubt verschiedene vorteilhafte Zustände des Rollkörpers, insbesondere einen befüllten/aufgeblasenen und einen entleerten Zustand, je nach Verwendung des Rollkörpers. Bei einem lösbar an der Tragstruktur angeordneten Rollkörper kann dieser nach Benutzung der Transportvorrichtung von dieser gelöst und entleert werden, was eine platzsparen Verstauung des Rollkörpers ermöglicht. Weiter vorteilhaft ist ein aufblasbarer Rollkörper, da dieser durch Deformation der Rollkörperoberfläche eventuelle Unebenheiten des Untergrunds, über welchen er rollt, ausgleichen kann und ein ruhigeres Rollen des Rollkörpers und damit der Transportvorrichtung begünstigt.

Aufblasbare Varianten des Rollkörpers erlauben zudem eine wesentlich leichtere Bauform als bei Rädern. Zwar können auch Räder aus dem Stand der Technik mit einem aufblasbaren Profil versehen werden, doch sind die dabei erforderlichen Felgen typischerweise relativ schwer.

In einigen Ausführungsformen umfasst der Rollkörper mindestens ein flexibles und reissfestes Material, insbesondere Kunststoff, wie beispielsweise Nylon, Nylon Ripstop, Polyester, Polyester Ripstop, Polyurethan, EVA, Gummi, Leder etc. Das Material kann für die Rollkörperhülle verwendet werden, damit diese stabil, für das Rollen, und nachgiebig, für die Anpassung an Unebenheiten auf dem Untergrund, ausgebildet werden kann.

In einigen Ausführungsformen kann das Kopplungselement als Griff zum händischen Ziehen der Transportvorrichtung durch den Benutzer ausgebildet sein.

In einigen Ausführungsformen ist die Tragstruktur zwischen Transportbehälter und Rollkörper klappbar ausgebildet, sodass der Rollkörper in eine Richtung zur Unterseite oder Oberseite des Transportbehälters hin klappbar ist. Dabei ist die Unterseite des Transportbehälters im operativen Betrieb dem Untergrund zugewandt. Dementsprechend ist die Oberseite des Transportbehälters im operativen Betrieb dem Untergrund abgewandt.

In weiteren Ausführungsformen ist die Tragstruktur zwischen Transportbehälter und Rollkörper einziehbar ausgebildet, sodass der Rollkörper in Richtung des Transportbehälters einziehbar ist. Hierdurch lässt sich die Ausdehnung der Transportvorrichtung bei eingezogenem Rollkörper verringern.

In einigen Ausführungsformen ist die Tragstruktur zwischen Transportbehälter und Kopplungselement bzw. Griff klappbar und/oder einziehbar ausgebildet. Hierdurch lässt sich die Ausdehnung der Transportvorrichtung bei geklappten und/oder eingezogenen Zustand verringern.

In einigen Ausführungsformen ist der Rollkörper in Relation zum Transportbehälter bzw. der den Rollkörper aufnehmende Tragstrukturabschnitt in Relation zum restlichen Teil der Tragstruktur gefedert angeordnet. Eine solche gefederte Verbindung erhöht die Toleranz gegenüber verschiedenen Untergründen und deren Beschaffenheit. Weiterhin erhöht sie den Komfort beim Bewegen der Transportvorrichtung über Untergrund mit groben Unebenheiten, da Stösse gedämpft werden.

In einigen Ausführungsformen ist die Koppelung bzw. der Griff in Relation zum Transportbehälter gefedert angeordnet. Eine solche Federung erhöht den Komfort und den Einsatzbereich der Transportvorrichtung.

In einigen Ausführungsformen sind Zug-, Blatt-, Gasfedern, sowie Federungen unter Verwendung von Kunststoffelementen denkbar, um eine gefederte Verbindung zwischen Transportbehälter und Rollkörper bzw. zwischen dem den Rollkörper aufnehmenden Tragstrukturabschnitt zum restlichen Teil der Tragstruktur und /oder zwischen der Koppelung bzw. dem Griff und dem Transportbehälter zu realisieren.

In einigen Ausführungsformen ist die Tragstruktur zwischen dem Transportbehälter und dem Rollkörper derart ausgebildet, dass der Rollkörper in Relation zum Transportbehälter um eine Längsachse wanken kann. Dabei ergibt sich der Vorteil, dass das von Hindernissen oder Unebenheiten auf dem Untergrund auf den Rollkörper potentiell ausgeübte Drehmoment nicht auf die gesamte Transportvorrichtung übertragen wird. Die Tragstruktur erlaubt in einer solchen Ausführungsform nämlich eine Drehung des Rollkörpers um die Längsachse, relativ zum Transportbehälter.

In einigen Ausführungsformen ist das Kopplungselement, beispielsweise ein Griff, drehbar oder gedämpft drehbar ausgebildet, sodass diese Roll- und/oder Nick- und/oder Gierbewegungen um eine Längs- bzw. Quer- bzw. Vertikalachse erlaubt. Dabei sind beispielsweise Kugelkopfgelenklager etc. verwendbar. Über ein Lager kann das Kopplungselement bzw. der Griff mit der Tragstruktur verbunden sein und ermöglicht so eine Verdrehung des Kopplungselements bzw. des Griffs gegenüber der Transportvorrichtung in bis zu drei Freiheitsgraden.

In einigen Ausführungsformen ist das Kopplungselement starr bzw. nicht-drehbar ausgebildet.

Einige Ausführungsformen der Transportvorrichtung sind derart ausgebildet, dass Rollbewegungen um die Längsachse der Transportvorrichtung nicht oder nur eingeschränkt möglich sind, um das von Hindernissen oder Unebenheiten auf dem Untergrund auf den Rollkörper potentiell ausgeübte Drehmoment ganz oder teilweise zu kompensieren bzw. zu dämpfen.

In einige Ausführungsformen ist das Kopplungselement relativ zur Tragstruktur seitlich verschiebbar ausgestaltet, sodass durch dessen Verschieben der Schwerpunkt der Transportvorrichtung so ausgerichtet werden kann, dass die Transportvorrichtung keine Seitenlage bzw. Schieflage in Längsrichtung aufweist, auch wenn der Schwerpunkt z.B. aufgrund seiner ungleichmässigen Beladung nicht exakt in der Mitte der Transportvorrichtung liegt.

In einigen Ausführungsformen wird der Transportbehälter durch mindestens eine Tasche und/oder einen Rucksack bzw. Sack und/oder ein Netz und/oder einen Koffer etc. gebildet. Der Transportbehälter kann dabei einseitig offen und/oder verschliessbar, also abgeschlossen sein, sodass das zu transportierende Gut, insbesondere Gepäck, nicht herausfallen kann. Der Transportbehälter kann durch verbundene Materialbahnen, sowie durch Hartschalenelemente, o.ä. gebildet werden.

In weiteren Ausführungsformen umfasst die Transportvorrichtung mindestens einen Tragegurt, insbesondere zwei Schultergurte. Der mindestens eine Tragegurt ist an mindestens einer Stelle mit der Transportvorrichtung fest oder lösbar verbunden, insbesondere an zwei Stellen, und ist als Materialband ausgebildet. Der Tragegurt ermöglicht das Tragen oder Anheben der Transportvorrichtung.

In einigen Ausführungsformen kann die Transportvorrichtung mindestens zwei Räder umfassen, die um eine Rotationsachse drehbar an der Transportvorrichtung angeordnet sind.

In einigen Ausführungsformen können am Transportbehälter auf der dem Rollkörper zugewandten Seite mindestens zwei, insbesondere auch vier zusätzliche Räder und/oder Rollen drehbar angeordnet sein, die insbesondere in einer zum Transportbehälter hin geklappten Position des Rollkörpers ein Ziehen der Transportvorrichtung erlauben. Dabei befindet sich in der Ausführungsform mit zwei zusätzlichen Rädern und/oder Rollen im entsprechenden operativen Betrieb mehr als die Hälfte des Volumens des Transportbehälters oberhalb der dem Boden abgewandten Seite einer Ebene, die durch zwei Punkte auf der Symmetrieachse des Rollkörpers, in ausgeklappter Position, sowie dem Mittelpunkt des Kopplungselements bzw. des Griffs, ebenfalls in ausgeklappter Position, definiert ist. Die Räder und/oder Rollen erlauben bei einem ebenen bzw. glatten Untergrund ein Ziehen der Transportvorrichtung in einer Position, in der sich der Schwerpunkt des Transportbehälters in einem Bereich über den Rädern befindet. Dies reduziert das auf das Kopplungselement bzw. den Griff wirkende Drehmoment und erhöht den Komfort beim Ziehen der Transportvorrichtung. Bei dieser Art der Benutzung kommt der Rollkörper nicht zum Einsatz.

In einigen Ausführungsformen umfasst die Transportvorrichtung einen Zuggurt, welcher eine Verbindungsvorrichtung umfasst mit der die Transportvorrichtung mit dem Zuggurt lösbar verbunden werden kann, wobei die Verbindungsvorrichtung drehbar oder drehbar gedämpft oder starr, respektive nicht-drehbar, mit dem Zuggurt fest verbunden ist. Der Zuggurt kann als eine Materialschlinge zum Umlaufen des Körpers des Benutzers ausgebildet sein und ermöglicht ein rückenschonendes und energiesparendes Ziehen der Transportvorrichtung.

In einigen Ausführungsformen kann die Transportvorrichtung einen Zuggurt umfassen, der lösbar, sowie drehbar oder drehbar gedämpft oder starr mit der Kopplung verbunden sein kann.

In einigen Ausführungsformen kann die Transportvorrichtung mit einer (Hand-)Pumpe, einem Pumpsack oder einer Druckkapsel für das Aufblasen des Rollkörpers ausgestattet sein.

In einigen Ausführungsformen kann die Transportvorrichtung mit einem elektrischen Antrieb des Rollkörpers ausgestattet sein.

In einigen Ausführungsformen kann die Transportvorrichtung mindestens einen Tragegurt umfassen, insbesondere zwei Schultergurte.

Gemäss einem weiteren Aspekt kann eine Offenbarungsgemässe Transportvorrichtung eine Tragstruktur, ein Kopplungselement, sowie einen Rollkörper, welcher eine Rotationssymmetrie aufweisen kann, umfassen. Der Durchmesser des Rollkörpers kann, senkrecht zu seiner Symmetrieachse, kleiner oder gleich der Länge, respektive Breite, des Rollkörpers sein. Die Tragstruktur verbindet das Kopplungselement und den Rollkörper und die Tragstruktur ist zwischen dem Kopplungselement und den Rollkörper derart ausgebildet, dass eine Last daran angebracht werden kann. Dabei befindet sich die Last, im operativen Betrieb, auf einer ersten Seite einer Ebene, die im operativen Betrieb dem Untergrund zugewandt ist. Die Ebene ist durch zwei Punkte auf der Symmetrieachse des Rollkörpers, sowie dem Mittelpunkt des Kopplungselements definiert.

In einigen Ausführungsformen kann die Last insbesondere als Transportbehälter ausgebildet sein. Die oben genannten Ausführungsformen sind aber ebenso für eine Transportvorrichtung anwendbar, die eine anders gestaltete Last umfasst.

In einigen Ausführungsformen umfasst die bereitgestellte Transportvorrichtung einen Transportbehälter zum Aufnehmen von Objekten, wobei der Transportbehälter lösbar oder fest zwischen Kopplungselement und Rollkörper mit der Tragstruktur verbunden ist, beispielsweise durch einen Verbindungsmechanismus, Gurte, ein Netz, eine Plache, einen Sack oder ähnlichem.

### KURZE BESCHREIBUNG DER FIGUREN

Anhand der in den nachfolgenden Figuren gezeigten Ausführungsbeispielen und der dazugehörigen Beschreibung werden Aspekte der Offenbarung näher erläutert. Es zeigen:
- Fig. 1: eine schematische Seitenansicht einer Offenbarungsgemässen Transportvorrichtu ng;
- Fig. 2: eine schematische Seitenansicht einer weiteren Offenbarungsgemässen Transportvorrichtung;
- Fig. 3: a) eine aus dem Stand der Technik bekannte Transportmittelanordnung mit Achse und Rädern für eine Transportvorrichtung zum Gepäcktransport auf einem Untergrund mit Hindernis;
b) eine schematische Seitenansicht des Rollkörpers einer Offenbarungsgemässen Transportvorrichtung auf einem Untergrund mit Hindernis;
c) eine schematische Seitenansicht des Rollkörpers einer Offenbarungsgemässen Transportvorrichtung auf einem Untergrund mit Hindernis;
- Fig. 4: a) eine schematische Seitenansicht einer Offenbarungsgemässen Transportvorrichtung auf einem Untergrund mit Hindernis;
b) eine weitere schematische Seitenansicht einer Offenbarungsgemässen Transportvorrichtung auf einem Untergrund mit Hindernis;
- Fig. 5: eine schematische Aufsicht eines Querschnitts eines Rollkörpers verbunden mit der Tragstruktur;
- Fig. 6: eine schematische Aufsicht eines Querschnitts eines zweigeteilten Rollkörpers verbunden mit der Tragstruktur;
- Fig. 7: a) eine schematische Seitenansicht einer Offenbarungsgemässen Transportvorrichtung mit einklappbarer Tragstruktur;
b) eine schematische Seitenansicht einer Offenbarungsgemässen Transportvorrichtung mit eingeklapptem Tragstrukturabschnitt;
c) eine schematische Seitenansicht einer Offenbarungsgemässen Transportvorrichtung mit eingeklapptem Tragstrukturabschnitt;
- Fig. 8: eine schematische Seitenansicht einer Offenbarungsgemässen Transportvorrichtung mit Zuggurt;
- Fig. 9: eine schematische Seitenansicht einer Offenbarungsgemässen Transportvorrichtung mit Rädern bzw. Rollen;
- Fig. 10: a) ein Ausschnitt einer schematischen Seitenansicht einer Offenbarungsgemässen Transportvorrichtung;
b) ein vergrösserter Ausschnitt von Fig. 10 a, der das Kopplungselement zeigt;
c) ein vergrösserter Ausschnitt von Fig. 10 a, der das Kopplungselement zeigt;
d) ein vergrösserter Ausschnitt von Fig. 10a, der das Kopplungselement zeigt;
- Fig. 11: eine schematische Seitenansicht einer Offenbarungsgemässen Transportvorrichtung mit Zuggurt;

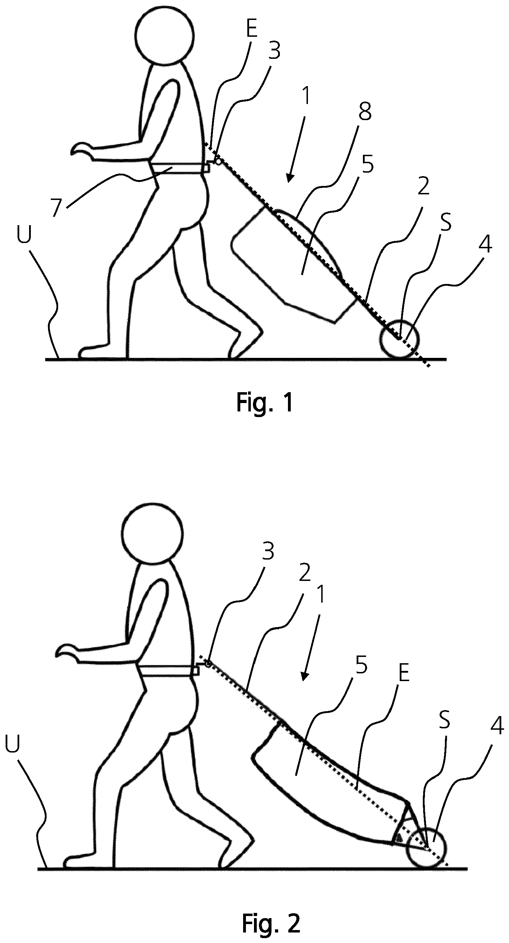

- Fig. 1 2: a) eine schematische Seitenansicht einer weiteren Offenbarungsgemässen Transportvorrichtung mit flexibler Tragstruktur;
b) eine schematische Seitenansicht einer weiteren Offenbarungsgemässen Transportvorrichtung mit flexibler Tragstruktur;
c) eine schematische Seitenansicht einer weiteren Offenbarungsgemässen Transportvorrichtung mit federnder Tragstruktur;
d) eine schematische Seitenansicht einer weiteren Offenbarungsgemässen Transportvorrichtung mit federnder Tragstruktur;
e) eine schematische Seitenansicht einer weiteren Offenbarungsgemässen Transportvorrichtung mit federnder Tragstruktur und

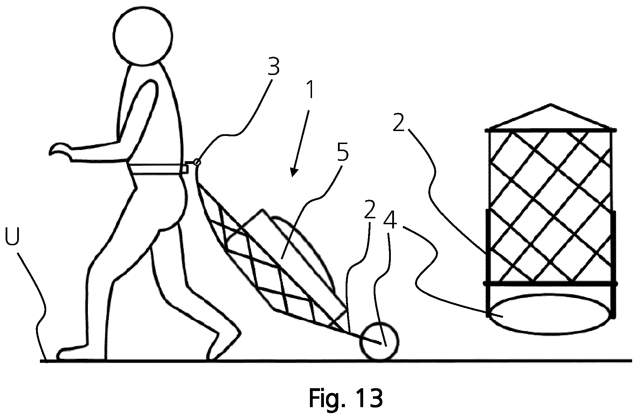

- Fig. 13: eine schematische Seitenansicht und Aufsicht einer weiteren Offenbarungsgemässen Transportvorrichtung mit Netz als Teil der Tragstruktur.

### BESCHREIBUNG EXEMPLARISCHER AUSFÜHRUNGSFORMEN

Die **Figuren 1, 2****,** **4a****,** **4b****,** **7a****,** **8, 9****,** **10a****,** **11****,** **12a-e** **und** **13** zeigen in einer Seitenansicht die Transportvorrichtung 1, welche von einem Benutzer über einen Untergrund U gezogen wird. Die Transportvorrichtung umfasst dabei eine Tragstruktur 2, die den Rollkörper 4 mit dem hier beispielhaft als Griff 3 ausgestalteten Kopplungselement verbindet. Der Transportbehälter 5 ist zwischen Rollkörper 4 und Griff 3 an der Tragstruktur 2 angeordnet. Der Rollkörper 4 ist in unmittelbarem Kontakt mit dem Untergrund. Der Griff 3 koppelt die Transportvorrichtung 1 mit dem Benutzer. Die Länge der Tragstruktur 2 liegt typischerweise zwischen 50 cm und 250 cm, insbesondere zwischen 80 cm und 140 cm. Die Breite der Tragstruktur 2 liegt üblicherweise zwischen 10 cm und 120 cm, insbesondere zwischen 40cm und 80 cm.

Das Volumen des Transportbehälters 5 liegt typischerweise zwischen 10 Litern und 200 Litern, insbesondere zwischen 35 Litern und 90 Litern.

In **Figur 1** ist eine Ausführungsform der Transportvorrichtung mit einer Tragstruktur 2 zu sehen, die aus Gestänge besteht. Dieses verleiht der Transportvorrichtung 1 die nötige Biegefestigkeit, um ein Durchbiegen der Transportvorrichtung 1 zwischen dem Kopplungselement bzw. dem Griff 3 und dem Rollkörper 4 in Richtung des Untergrunds U zu minimieren. Weiter ist zu sehen, dass der Benutzer auf Hüfthöhe einen Zuggurt 7 trägt, welcher bandförmig um dessen Rumpf als eine Schlinge ausgebildet ist. An diesem Zuggurt 7 ist das Kopplungselement 3 angekoppelt und verbindet so die Transportvorrichtung 1 mit dem Zuggurt 7. An der Transportvorrichtung 1 ist ferner ein Tragegurt zu sehen, welcher hier beispielhaft als zwei Schultergurte 8 ausgebildet ist. Die Schultergurte 8 haben jeweils zwei Kontaktstellen, an denen sie mit der Transportvorrichtung 1 fest oder lösbar verbunden sind. Vorteilhafterweise liegen diese Kontaktstellen jeweils eine an der dem Griff 3 zugewandten Seite des Transportbehälters 5 und an der dem Rollkörper 4 zugewandten, d.h. an der gegenüberliegenden Seite des Transportbehälters 5. Der Transportbehälters 5 befindet sich mit mehr als der Hälfte seines Volumens (und damit bei typischer bzw. gleichmässiger Beladung auch der Schwerpunkt der Transportvorrichtung) auf der dem Untergrund U zugewandten Seite der Ebene E. Die Ebene E ist durch zwei Punkte auf einer Symmetrieachse S des Rollkörpers 4 sowie dem Mittelpunkt des Kopplungselements bzw. des Griffs 3 definiert.

**Figur 2** zeigt ferner eine weitere Ausführungsform der Tragstruktur 2, welche Gestänge umfasst, sowie einstückig mit in sich flexiblen Abschnitten ausgebildet ist. Der Transportbehälters 5 befindet sich mit mehr als der Hälfte seines Volumens (und damit bei typischer bzw. gleichmässiger Beladung auch der Schwerpunkt der Transportvorrichtung) auf der dem Untergrund U zugewandten Seite der Ebene E. Die Ebene E ist durch zwei Punkte auf einer Symmetrieachse S des Rollkörpers 4, sowie dem Mittelpunkt des Kopplungselements bzw. des Griffs 3 definiert. Der Rollkörper 4 ist um die Symmetrieachse S drehbar und fest oder lösbar mit der Tragstruktur 2 verbunden.

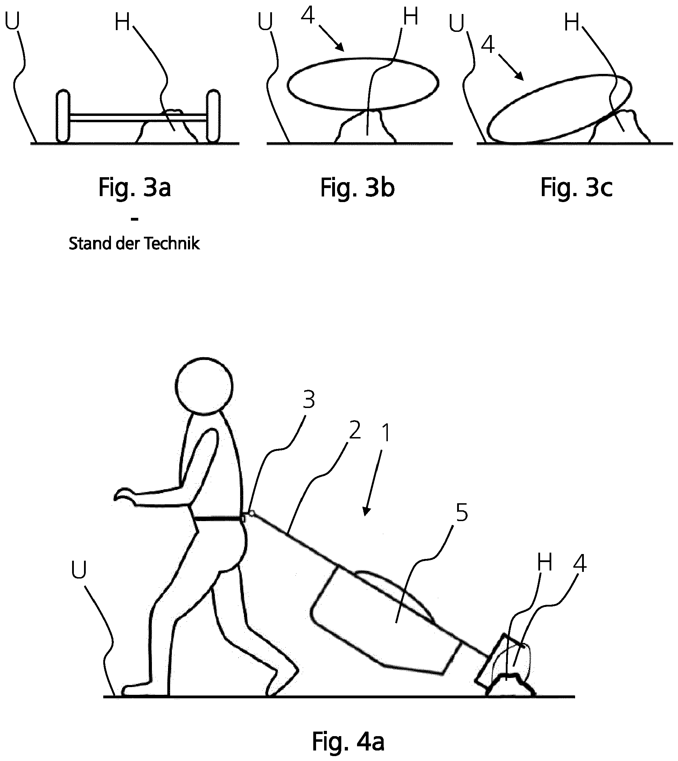

**Figur 3a** zeigt zur Verdeutlichung der Offenbarung eine Transportmittelanordnung aus dem Stand der Technik, bei der an den Enden einer Achse zwei Räder angeordnet sind. In der seitlichen Ansicht ist die Anordnung über einen Untergrund U mit einem Hindernis H rollend dargestellt. Es zeigt sich die Limitation dieser Anordnung beim Überwinden von Hindernissen H, da die Achse von einem Hindernis H gestoppt wird, wenn die Bodenfreiheit nicht ausreicht um das Hindernis H ohne Kontakt zu passieren.

In den **Figuren 3b, 3c** ist im Vergleich dazu ein Rollkörper 4 einer Offenbarungsgemässen Transportvorrichtung 1 beim Überwinden eines Hindernisses H auf dem Untergrund U zu sehen. Insbesondere in **Figur 3c** zeigt sich die vorteilhafte Ausführungsform des Rollkörpers 4 als Rotationsellipsoid. In dieser Form kann der Rollkörper 4 durch Drehen um eine Achse, welche durch seinen Volumenmittelpunkt und senkrecht zu seiner Symmetrieachse S verläuft, derart gekippt werden, dass Hindernisse H passiert respektive überrollt werden kann.

Durch die sich zu den Enden hin verjüngenden Ausgestaltung des Rollkörpers 4 wird nur ein geringes zusätzliches Drehmoment auf den Schwerpunkt des Transportbehälters 5 ausgeübt, d.h. ein geringeres zusätzliches Drehmoment, verglichen mit einem als Zylinder ausgebildeten Rollkörper 4.

In **Figur 4a** ist das in **Figur 3c** veranschaulichte gekippte Passieren von Hindernissen H des Rollkörpers 4 ebenfalls dargestellt, hier in einer Seitenansicht der Transportvorrichtung 1. Ferner ist eine Ausführungsform der Tragstruktur 2 erkennbar, die eine Separation der Kippbewegung des Rollkörpers 4 zum Überwindes des Hindernisses H von der Bewegung des Transportbehälters 5 erlaubt. Bei einem Drehen des Rollkörpers 4 um die Achse durch seinen Volumenmittelpunkt und senkrecht zu seiner Symmetrieachse S wird diese Rotation von der Tragstruktur 2 nicht auf den Transportbehälter 5 übertragen.

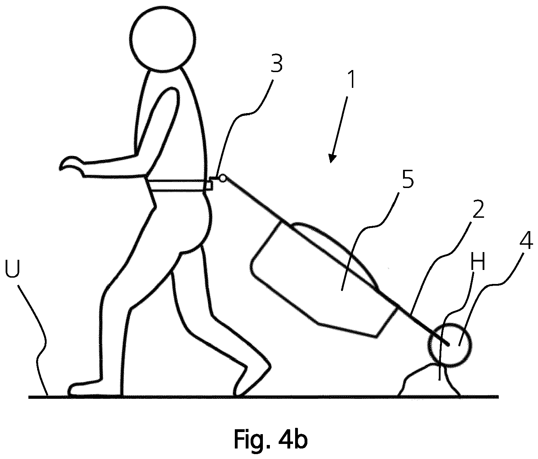

In **Figur 4b** ist das Passieren von Hindernissen H des Rollkörpers 4 bei einer Ausführungsform der Tragstruktur 2 erkennbar, die keine Separation der Kippbewegung des Rollkörpers 4 zum Überwindes des Hindernisses H von der Bewegung des Transportbehälters 5 erlaubt.

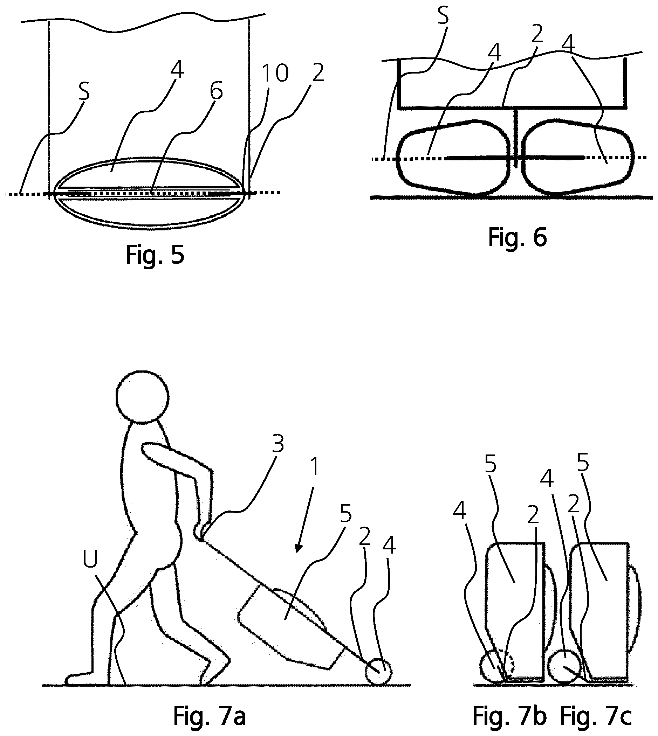

**Figuren 5** und **6** zeigen einen Ausschnitt der Tragstruktur 2, in dem der Rollkörper 4 angeordnet ist. Durch den Mittelpunkt des Rollkörpers 4 verläuft die Symmetrieachse S. Der Durchmesser des Rollkörpers 4 ist dabei kleiner oder gleich der Länge, respektive Breite, des Rollkörpers 4. Ferner weist der Rollkörper 4 eine Rotationssymmetrie auf und ist zu den Enden hin entlang der Symmetrieachse S im Durchmesser verjüngend ausgebildet. Die Länge des Rollkörpers 4 kann beispielsweise zwischen 5 cm und 90 cm liegen, insbesondere zwischen 20 cm und 50 cm. Der Durchmesser des Rollkörpers 4 liegt beispielsweise im Maximum zwischen 3 cm und 40 cm, insbesondere zwischen 5 cm und 20 cm.

In **Figur 5** ist eine Ausführung des Rollkörpers 4 in Form eines Rotationsellipsoids dargestellt, dieser umfasst zur seitlichen Aufnahme von Tragstrukturendstücken 10 eine Achse 6 zur, um die Symmetrieachse S drehbaren, Lagerung des Rollkörpers 4 um die Symmetrieachse S. **Figur 6** zeigt eine alternative Ausführungsform des Rollkörpers 4 als Doppelkonus. Dabei ist der Rollkörper 4 in zwei kegelähnliche symmetrische Hälften unterteilt. In dieser Ausführungsform des Rollkörpers 4 sind die zwei Hälften des Rollkörpers auf der inneren Seite der jeweiligen Hälfte mit Tragstrukturendstücken 10 verbunden und um die Symmetrieachse drehbar.

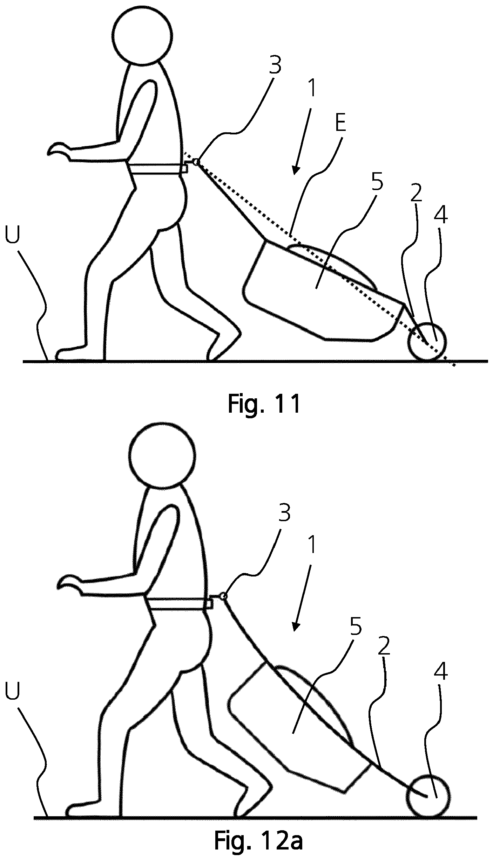

**Figuren 7a****-c** zeigen verschiedene Zustände der Transportvorrichtung 1 in einer Ausführungsform, in der die Tragstruktur 2 zwischen Transportbehälter 5 und Rollkörper 4 in eine Richtung hin zum Transportbehälter 5 klappbar ausgebildet ist. In **Figur 7a** ist die Tragstruktur 2 in einem ausgeklappten, respektive gestreckten, Zustand dargestellt. Die möglichen Positionen des Rollkörpers 4 befinden sich zwischen der dargestellten ausgestreckten Position und der eingeklappten Position, die in den **Figuren 7b****-c** zu sehen ist, d.h. die Transportvorrichtung 1 kann auch in einer etwas angewinkelten Position (insbesondere zwischen Kopplungselement und Transportbehälter und/oder zwischen Rollkörper und Transportbehälter, wie in **Figur 11** dargestellt) benutzt bzw. manövriert werden. In **Figur 7b** wird der Rollkörper 4, im eingeklappten Zustand, in eine dafür vorgesehene Aussparung im Transportbehälter 5 mindestens partiell eingebettet. In **Figur 7c** liegt der Rollkörper 4 in einem eingeklappten Zustand der Tragstruktur 2 am Transportbehälter 5 an.

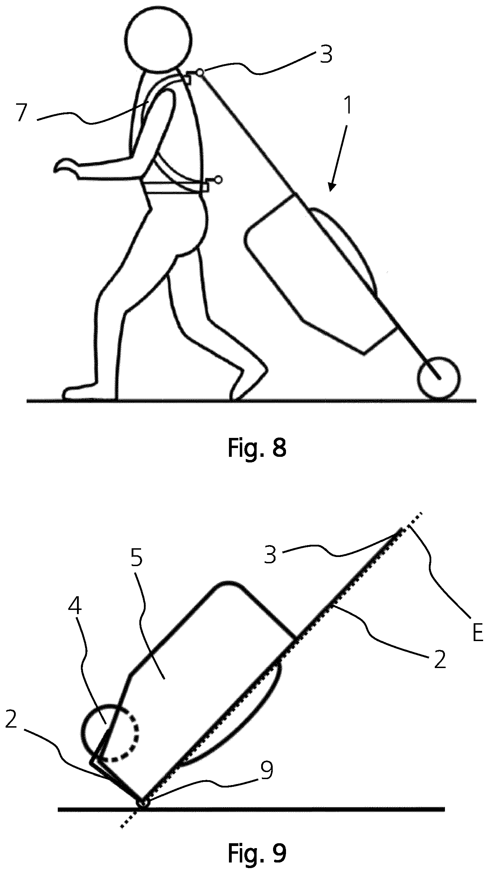

**Figur 8** zeigt eine Ausführungsform der Transportvorrichtung 1 mit einem Zuggurt 7, bei dem die Transportvorrichtung 1 über das Kopplungselement 3 mit dem Zuggurt 7 auf Schulterhöhe des Benutzers lösbar oder fest verbunden ist.

**Figur 9** stellt eine weitere Ausführungsform der klappbaren Tragstruktur 2 dar. Dabei sind in der Ebene E, die durch zwei Punkte auf der Symmetrieachse S des Rollkörpers 4, in ausgeklappter Position, sowie dem Mittelpunkt des Kopplungselements 3 definiert ist, am unteren Ende des Transportbehälters 5 mindestens zwei zusätzliche Räder bzw. Rollen 9 angeordnet. Diese Räder bzw. Rollen 9 erlauben ein alternatives rollendes Ziehen oder Gleiten der Transportvorrichtung am Kopplungselement bzw. Griff 3, ähnlich einem üblichen Rollkoffer. Der Schwerpunkt der Transportvorrichtung befindet sich dabei möglichst zentriert oberhalb der Rotationsachse der Räder bzw. Rollen 9.

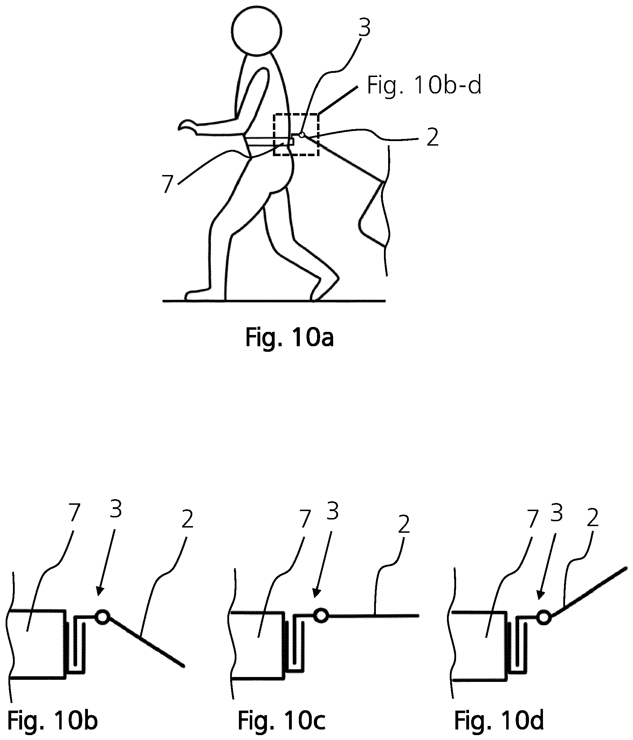

**Figur 10a** zeigt einen die Transportvorrichtung ziehenden Benutzer, der einen bandförmigen Zuggurt 7 trägt. Am Zuggurt 7 ist das Kopplungselement 3 angekoppelt.

Die **Figuren 10 b-d** zeigen einen Ausschnitt der **Figur 10a** in denen verschiede Auslenkungszustände des Kopplungselements 3 abgebildet sind. Die durch das Kopplungselement drei realisierte Freiheitsgrade, beispielsweise durch ein im Kopplungselement befindliches Kugelkopfgelenk, ermöglichen eine flexible Ausrichtung der Transportvorrichtung 1 relativ zum Zuggurt 7 und somit zum Benutzer. Dies ist vorteilhaft, da beispielsweise Höhenunterschiede des Untergrunds zwischen der Position des Benutzers und der Position des Transportmittels 1 kompensiert werden können. Ferner wird ein Abbiegen des Benutzers relativ zur Transportvorrichtung 1 möglich, da das Kopplungselement 3 ein derartiges Knicken gewährleisten kann.

**Figur 11** zeigt ferner eine Transportvorrichtung 1 in einer angewinkelten Position (insbesondere zwischen Kopplungselement 3 und Transportbehälter 5 und zwischen Rollkörper 4 und Transportbehälter 5).

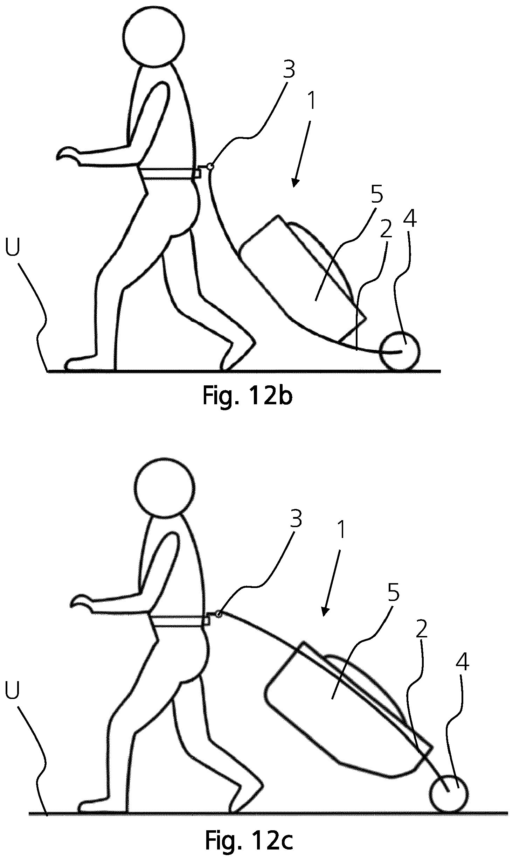

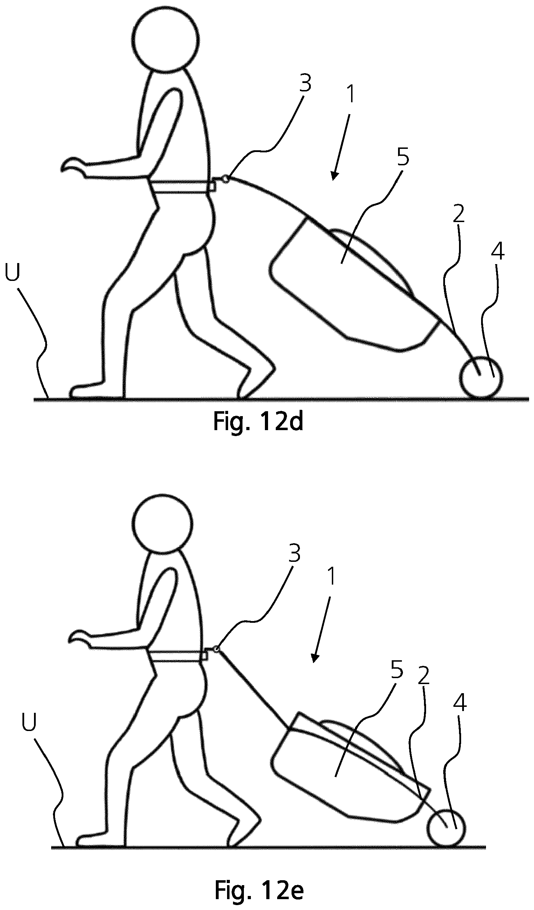

**Figuren 12a** und **12b** zeigen ferner weitere Ausführungsformen der Tragstruktur 2, welche durchgängig flexibel ausgebildet ist.

Die Figuren **12c** bis **12e** zeigen des Weiteren Ausführungsformen der Offenbarungsgemässen Transportvorrichtung 1 mit einer Tragstruktur 2 die federnd und zumindest in Bereichen bogenförmig ausgebildet ist. Die Figuren **12a** und **12b** zeigen eine bogenförmige Tragstruktur 2, die in Richtung des Untergrunds U ausgerichtet ist, wohingegen in den Figuren **12c** bis **12e** eine bogenförmige Tragstruktur 2 gezeigt sind, die jeweils entgegen der Richtung des Untergrunds U ausgerichtet sind. Die in Figur **12e** dargestellte Tragstruktur 2 ist lediglich im Bereich zwischen dem Rollkörper 4 und dem Kopplungselementseitigen Ende des Transportbehälters 5 bogenförmig ausgebildet.

**Figur 13** zeigt ferner eine weitere Ausführungsform der Tragstruktur 2, welche in mindestens einem Abschnitt flexibel und einstückig mit einem Netz ausgestaltet ist, wobei der Abschnitt der Tragstruktur 5 zwischen Rollkörper 4 und Transportbehälter 5 bzw. Netz die nötige Festigkeit aufweist, um ein Durchhängen der Transportvorrichtung 1 mit direktem Kontakt des Transportbehälters 5 zum Untergrund U im operativen Betrieb zu verhindern. Die Tragstruktur 2 kann dabei klappbar und/oder faltbar ausgestaltet sein.

### LISTE DER BEZUGSZEICHEN

- 1: Transportvorrichtung
- 2: Tragstruktur
- 3: Kopplungselement bzw. Griff
- 4: Rollkörper
- 5: Transportbehälter
- 6: Achse des Rollkörpers
- 7: Zuggurt
- 8: Tragegurt
- 9: Räder bzw. Rollen
- E: Ebene
- S: Symmetrieachse des Rollkörpers
- U: Untergrund, respektive Boden
- H: Hindernis auf den Untergrund

## Patentansprüche

1. Transportvorrichtung (1), insbesondere zum Gepäcktransport, die Transportvorrichtung (1) umfassend:
- eine Tragstruktur (2);
- ein Kopplungselement (3);
- ein Rollkörper (4) mit einer Symmetrieachse (S), wobei der Rollkörper (4) eine Rotationssymmetrie aufweist und ein Durchmesser des Rollkörpers (4) kleiner oder gleich seiner Ausdehnung entlang der Symmetrieachse (S) ist;
- sowie einen Transportbehälter (5) zum Aufnehmen von Objekten, insbesondere Gepäck, wobei der Transportbehälter (5) lösbar oder fest mit der Tragstruktur (2) verbunden ist;
- wobei die Tragstruktur (2), das Kopplungselement (3) und den Rollkörper (4) verbindet und sich mehr als eine Hälfte des Volumens des Transportbehälters (5) auf einer ersten Seite, insbesondere einer in einem operativen Zustand einem Untergrund (U) zugewandten Seite, einer Ebene (E) befindet, wobei die Ebene (E) durch zwei Punkte auf der Symmetrieachse (S) sowie einem Mittelpunkt des Kopplungselements (3) definiert ist, und wobei der Transportbehälter (5) zwischen Kopplungselement (3) und Rollkörper (4) angeordnet ist
- wobei der Rollkörper (4) in eine Richtung zur Unterseite oder zur Oberseite des Transportbehälters (5) hin klappbar und/oder einziehbar ist, sodass die Ausdehnung der Transportvorrichtung (1) beim Manövrieren verringert werden kann.

2. Transportvorrichtung (1) nach Anspruch 1, wobei die Tragstruktur (2) ein Gestänge umfasst und/oder an den Transportbehälter (5) angrenzt.

3. Transportvorrichtung (1) nach einem der vorherigen Ansprüche, wobei die Tragstruktur (1) in mindestens einem Teilbereich flexibel ausgestaltet ist.

4. Transportvorrichtung (1) nach einem der vorherigen Ansprüche, wobei die Tragstruktur (2) zwischen Kopplungselement (3) und Transportbehälter (5) und/oder zwischen Rollkörper (4) und Transportbehälter (5) angewinkelt ausgestaltet ist.

5. Transportvorrichtung (1) nach einem der vorherigen Ansprüche, wobei der Rollkörper (4) zu seinen Enden hin entlang der Symmetrieachse im Durchmesser verjüngend ausgebildet ist, insbesondere in Form eines Rotationsellipsoids oder eines Doppelkonus.

6. Transportvorrichtung (1) nach einem der vorherigen Ansprüche, wobei der Rollkörper (4) in zwei symmetrische Hälften geteilt ist.

7. Transportvorrichtung (1) nach einem der vorherigen Ansprüche, wobei die Tragstruktur (2) an der des Kopplungselements (3) gegenüberliegenden Seite zur Aufnahme des Rollkörpers (4) derart ausgebildet ist, dass der Rollkörper (4) um seine Rotationsachse drehbar mit derTragstruktur (2) verbunden ist.

8. Transportvorrichtung (1) nach einem der vorherigen Ansprüche, wobei der Rollkörper (4) lösbar mit der Tragstruktur (2) verbunden ist.

9. Transportvorrichtung (1) nach mindestens einem der vorherigen Ansprüche, wobei der Rollkörper (4) mindestens ein aufblasbares Segment und mindestens ein Ventil umfasst.

10. Transportvorrichtung (1) nach einem der vorherigen Ansprüche, wobei der Rollkörper (4) mindestens ein flexibles und reissfestes Material umfasst, insbesondere Kunststoff.

11. Transportvorrichtung (1) nach einem der vorherigen Ansprüche, wobei das Kopplungselement (3) in eine Richtung zur Unterseite oder zur Oberseite des Transportbehälters (5) hin klappbar und/oder einziehbar ist.

12. Transportvorrichtung (1) nach einem der vorherigen Ansprüche, wobei der Rollkörper (4) und/oder das Kopplungselement (3) jeweils in Relation zum Transportbehälter (5) gefedert angeordnet ist.

13. Transportvorrichtung (1) nach einem der vorherigen Ansprüche, wobei der Rollkörper (4) in Relation zum Transportbehälter (5) um eine Achse quer zur Symmetrieachse (S) beweglich ist.

14. Transportvorrichtung (1) nach einem der vorherigen Ansprüche, wobei das Kopplungselement (3) Roll- und/oder Nick- und/oder Gierbewegungen um eine Längs-, und/oder Quer- und/oder Vertikalachse erlaubt.

15. Transportvorrichtung (1) nach einem der vorherigen Ansprüche, wobei die Transportvorrichtung mindestens zwei Räder (9) umfasst, die um eine Rotationsachse drehbar an der Transportvorrichtung (1) angeordnet sind.

16. Transportvorrichtung (1) nach einem der vorherigen Ansprüche, wobei die Transportvorrichtung (1) einen Zuggurt (7) umfasst, der mit dem Kopplungselement (3) lösbar verbunden ist, wobei die lösbare Verbindung drehbar, drehbar gedämpft oder starr ist.

## Claims

1. Transport device (1), in particular for transporting luggage, the transport device (1) comprising:
- a support structure (2);
- a coupling element (3);
- a rolling body (4) with an axis of symmetry (S), wherein the rolling body (4) has a rotational symmetry, and a diameter of the rolling body (4) is less than or equal to its extent along the axis of symmetry (S);
- and a transport container (5) for receiving objects, in particular luggage, wherein the transport container (5) is releasably or fixedly connected to the support structure (2);
- wherein the support structure (2) connects the coupling element (3) and the rolling body (4), and more than half the volume of the transport container (5) lies on a first side of a plane (E), in particular a side facing a ground surface (U) in operative use, wherein the plane (E) is defined by two points on the axis of symmetry (S) and a centre point of the coupling element (3), and wherein the transport container (5) is arranged between the coupling element (3) and the rolling body (4);
- wherein the rolling body (4) is foldable and/or retractable in a direction towards the underside or towards the topside of the transport container (5) such that the extent of the transport device (1) can be reduced when manoeuvring.

2. Transport device (1) according to Claim 1, wherein the support structure (2) comprises a rod and/or adjoins the transport container (5).

3. Transport device (1) according to one of the preceding claims, wherein the support structure (1) is configured so as to be flexible in at least a part region.

4. Transport device (1) according to one of the preceding claims, wherein the support structure (2) is configured so as to be angled between the coupling element (3) and the transport container (5) and/or between the rolling body (4) and the transport container (5).

5. Transport device (1) according to one of the preceding claims, wherein the rolling body (4) is configured such that it tapers in diameter towards its ends along the axis of symmetry, in particular in the form of a rotational ellipsoid or a double cone.

6. Transport device (1) according to one of the preceding claims, wherein the rolling body (4) is divided into two symmetrical halves.

7. Transport device (1) according to one of the preceding claims, wherein the support structure (2), on the side opposite the coupling element (3), is configured for receiving the rolling body (4) such that the rolling body (4) is connected to the support structure (2) so as to be rotatable about its rotational axis.

8. Transport device (1) according to one of the preceding claims, wherein the rolling body (4) is releasably connected to the support structure (2).

9. Transport device (1) according to one of the preceding claims, wherein the rolling body (4) comprises at least one inflatable segment and at least one valve.

10. Transport device (1) according to one of the preceding claims, wherein the rolling body (4) comprises at least one flexible and tear-resistant material, in particular plastic.

11. Transport device (1) according to one of the preceding claims, wherein the coupling element (3) is foldable and/or retractable in a direction towards the underside or towards the topside of the transport container (5).

12. Transport device (1) according to one of the preceding claims, wherein the rolling body (4) and/or the coupling element (3) are each arranged sprung in relation to the transport container (5).

13. Transport device (1) according to one of the preceding claims, wherein the rolling body (4) is movable about an axis transversely to the axis of symmetry (S) in relation to the transport container (5) .

14. Transport device (1) according to one of the preceding claims, wherein the coupling element (3) allows rolling and/or pitching and/or yawing movements about a longitudinal and/or transverse and/or vertical axis.

15. Transport device (1) according to one of the preceding claims, wherein the transport device comprises at least two wheels (9) which are arranged on the transport device (1) so as to be rotatable about a rotational axis.

16. Transport device (1) according to one of the preceding claims, wherein the transport device (1) comprises a pull strap (7) which is releasably connected to the coupling element (3), wherein the releasable connection is rotatable, rotatable with damping or rigid.

## Revendications

1. Dispositif de transport (1), en particulier servant au transport de bagages, le dispositif de transport (1) comprenant :
- une structure de support (2) ;
- un élément d'accouplement (3) ;
- un corps roulant (4) doté d'un axe de symétrie (S), le corps roulant (4) présentant une symétrie de révolution et un diamètre du corps roulant (4) étant inférieur ou égal à son étendue le long de l'axe de symétrie (S) ;
- ainsi qu'un contenant de transport (5) servant à recevoir des objets, en particulier des bagages, le contenant de transport (5) étant relié à la structure de support (2) de manière libérable ou fixe ;
- la structure de support (2) reliant l'élément d'accouplement (3) et le corps roulant (4) et plus de la moitié du volume du contenant de transport (5) se trouvant sur un premier côté, en particulier un côté tourné vers une surface sous-jacente (U) dans un état opérationnel, d'un plan (E), le plan (E) étant défini par deux points sur l'axe de symétrie (S) ainsi qu'un centre de l'élément d'accouplement (3), et le contenant de transport (5) étant disposé entre l'élément d'accouplement (3) et le corps roulant (4),
- le corps roulant (4) pouvant être rabattu et/ou rétracté dans une direction vers le côté inférieur ou vers le côté supérieur du contenant de transport (5), de sorte que l'étendue du dispositif de transport (1) puisse être réduite lors du maniement.

2. Dispositif de transport (1) selon la revendication 1, la structure de support (2) comprenant une tringlerie et/ou étant adjacente au contenant de transport (5).

3. Dispositif de transport (1) selon l'une des revendications précédentes, la structure de support (1) étant configurée de manière souple dans au moins une région partielle.

4. Dispositif de transport (1) selon l'une des revendications précédentes, la structure de support (2) étant configurée de manière inclinée entre l'élément d'accouplement (3) et le contenant de transport (5) et/ou entre le corps roulant (4) et le contenant de transport (5) .

5. Dispositif de transport (1) selon l'une des revendications précédentes, le corps roulant (4) étant réalisé de manière à présenter un diamètre se rétrécissant vers ses extrémités le long de l'axe de symétrie, en particulier sous la forme d'une ellipsoïde de révolution ou d'un double cône.

6. Dispositif de transport (1) selon l'une des revendications précédentes, le corps roulant (4) étant divisé en deux moitiés symétriques.

7. Dispositif de transport (1) selon l'une des revendications précédentes, la structure de support (2), sur le côté opposé à l'élément d'accouplement (3), étant réalisée pour la réception du corps roulant (4), de telle sorte que le corps roulant (4) soit relié à la structure de support (2) de manière rotative autour de son axe de rotation.

8. Dispositif de transport (1) selon l'une des revendications précédentes, le corps roulant (4) étant relié à la structure de support (2) de manière libérable.

9. Dispositif de transport (1) selon au moins l'une des revendications précédentes, le corps roulant (4) comprenant au moins un segment gonflable et au moins une soupape.

10. Dispositif de transport (1) selon l'une des revendications précédentes, le corps roulant (4) comprenant au moins un matériau souple et résistant au déchirement, en particulier une matière synthétique.

11. Dispositif de transport (1) selon l'une des revendications précédentes, l'élément d'accouplement (3) pouvant être rabattu et/ou rétracté dans une direction vers le côté inférieur ou vers le côté supérieur du contenant de transport (5).

12. Dispositif de transport (1) selon l'une des revendications précédentes, le corps roulant (4) et/ou l'élément d'accouplement (3) étant disposés de manière suspendue sur ressort respectivement par rapport au contenant de transport (5).

13. Dispositif de transport (1) selon l'une des revendications précédentes, le corps roulant (4) étant mobile par rapport au contenant de transport (5) autour d'un axe transversalement à l'axe de symétrie (S).

14. Dispositif de transport (1) selon l'une des revendications précédentes, l'élément d'accouplement (3) autorisant des mouvements de roulement et/ou de tangage et/ou de lacet autour d'un axe longitudinal et/ou transversal et/ou vertical.

15. Dispositif de transport (1) selon l'une des revendications précédentes, le dispositif de transport comprenant au moins deux roues (9) qui sont disposées sur le dispositif de transport (1) de manière rotative autour d'un axe de rotation.

16. Dispositif de transport (1) selon l'une des revendications précédentes, le dispositif de transport (1) comprenant une sangle de traction (7) qui est reliée à l'élément d'accouplement (3) de manière libérable, la liaison libérable étant rotative, rotative de manière amortie ou rigide.
